# EUROPÄISCHE PATENTSCHRIFT

(11) **EP 2 338 438 B1**
(45) Veröffentlichungstag und Bekanntmachung des Hinweises auf die Patenterteilung: **19.06.2013**
(21) Anmeldenummer: 10196393.2
(22) Anmeldetag: 22.12.2010
(51) Int. Cl.: A61C 17/20, A61C 1/00, A61C 1/07

(54) **Verfahren zur automatischen Ermittlung von Betriebszuständen einer dentalen Ultraschallvorrichtung**
Method for automatically determining operational states of a dental ultrasound device
Procédé d'établissement automatique d'états de fonctionnement d'un dispositif à ultrasons dentaire

(30) Priorität: 22.12.2009 DE 102009055197
(43) Veröffentlichungstag der Anmeldung: 29.06.2011
(73) Patentinhaber: Sirona Dental Systems GmbH, 64625 Bensheim (DE)
(72) Erfinder: Sutter, Ralf, 69469, Weinheim (DE); Ehrlich, Stefan, 68519, Viernheim (DE); Oehme, Bernd, 55128, Mainz (DE)
(74) Vertreter: Sommer, Peter

(56) Entgegenhaltungen:
- EP-A1- 2 062 547
- DE-A1- 4 304 170
- DE-A1-102007 053 460

## Beschreibung

### Technisches Gebiet

Die Erfindung betrifft ein Verfahren zur automatischen Ermittlung von Betriebszuständen einer dentalen Ultraschallvorrichtung zum Zweck der automatischen Anpassung von Schwingungsamplitude und Schwingungsrichtung einer Ultraschall-Werkzeugspitze der Ultraschallvorrichtung.

### Stand der Technik

Dentale Ultraschallvorrichtung mit einer Ultraschall-Werkzeugspitze werden beispielsweise zur Entfernung von Zahnstein eingesetzt. Dabei ist es wichtig, dass die Bewegungsrichtung des distalen Endes der Werkzeugspitze tangential zur berührten Zahnoberfläche erfolgt, um Schädigungen zu vermeiden.

Weiterhin sollte sowohl eine Berührung des Bindegewebes des Zahnhalteapparats als auch eine Blockade der Ultraschall-Werkzeugspitze, welche durch zu hohe Anpresskraft auf die Zahn- oder Wurzeloberfläche auftreten kann, weitgehend vermieden werden, um das Bindegewebe bzw. die berührten Objektoberflächen nicht zu schädigen.

Um eine Beschädigung gesunder Zahnsubstanzen vorzubeugen, muss außerdem darauf geachtet werden, dass die Ultraschall-Werkzeugspitze rechtzeitig nach Abtragen des Zahnsteins vom Zahn wegbewegt wird.

Daher ist eine genaue Kenntnis des aktuellen Betriebszustands der Ultraschall-Werkzeugspitze bzw. der Randbedingungen erstrebenswert.

Aus der DE 10 2007 053 460 A1 ist ein Verfahren zum Betrieb einer dentalen Ultraschallvorrichtung bekannt, das eine automatische Einstellung einer optimalen Schwingungsrichtung ermöglicht.

Die DE 43 04 170 A1 lehrt ein Verfahren, welches Anhand eines ermittelten Schwingungsverhaltens eines an eine Oberfläche herangebrachten, biegeschwingungsfähigen Detektorelements eine Charakterisierung der berührten Oberfläche ermöglicht.

Ansonsten werden die genannten Probleme im Wesentlichen durch die Ausbildung und die Erfahrung des Benutzers vermieden.

Es ist daher die Aufgabe der Erfindung, ein Verfahren bereitzustellen, welches den aktuellen Betriebszustand einer Ultraschall-Werkzeugspitze automatisch bestimmt und eine automatische Anpassung des Schwingungsverhaltens ermöglicht.

### Darstellung der Erfindung

Ein erfindungsgemäßes Verfahren zur automatischen Ermittlung von Betriebszuständen einer dentalen Ultraschallvorrichtung zum Zweck einer automatischen Anpassung von Schwingungsamplitude und Schwingungsrichtung einer Ultraschall-Werkzeugspitze der Ultraschallvorrichtung sieht vor, die Ultraschall-Werkzeugspitze mittels eines Impulses zu Schwingungen anzuregen und mindestens eine Impulsantwort nach Heranbringen der Ultraschall-Werkzeugspitze an eine Objektoberfläche zu ermitteln. Weiterhin wird mittels einer Transformation der Impulsantwort in den Frequenzbereich ein Antwortspektrum bestimmt. Es wird zur Ermittlung einer Schwächung des Antwortspektrums ein aufgrund eines Auswahlbereichs des Antwortspektrums gebildeter Vergleichswert mit einem Schwächungsgrenzwert verglichen oder es wird eine Verschiebung im Frequenzbereich des Antwortspektrums gegenüber einem Referenzspektrum als Verschiebungswert ermittelt und mit einem Verschiebungsgrenzwert verglichen oder es wird eine Breite von mindestens einem lokalen Wellenberg des Antwortspektrums als Breitenwert ermittelt und mit einem Breitengrenzwert verglichen.

Durch das Analysieren einer Impulsantwort auf einen kurzen, aber spektral möglichst breiten Anregungsimpuls können Randbedingungen, also solche Bedingungen, die den aktuellen Betriebszustand einer Ultraschall-Werkzeugspitze bestimmen, objektiv ermittelt werden. Wird das erfindungsgemäße Verfahren in regelmäßigen, kurzen Abständen durchgeführt, so kann ein fehlerfreier Betrieb der Ultraschall-Werkzeugspitze garantiert werden, ohne dass dafür die Beurteilung bzw. die Erfahrung des Benutzers notwendig wäre.

Der Vergleichswert kann durch Integration oder Summation über den Auswahlbereich gebildet werden. Es kann aber auch ein gewichteter Mittelwert gebildet oder eine Verteilung der Effektivwerte im Auswahlbereich betrachtet werden.

Der Auswahlbereich kann sich über den gesamten Frequenzbereich des Antwortspektrums oder auch nur über einen Teil erstrecken. Je kleiner der Auswahlbereich gewählt wird, um so schneller kann der Vergleichswert gebildet und damit das erfindungsgemäße Verfahren durchgeführt werden. Allerdings stehen mit einem kleineren Auswahlbereich auch weniger Unterscheidungsmerkmale zur Verfügung, wodurch gegebenenfalls die Sensitivität und damit die Qualität des Verfahrens beeinträchtig werden kann. Die notwendige Größe des Auswahlbereichs hängt weiterhin wesentlich vom zu klassifizierenden Material ab.

Eine Blockade der Werkzeugspitze oder auch das Berühren bzw. Eindringen in entzündetes Desmodont kann daher mittels des erfindungsgemäßen Verfahrens schnell und objektiv erkannt werden und dadurch eine weitere Schädigung der zu behandelnden Objektoberfläche vermieden werden, indem beispielsweise die Leistung der Werkzeugspitze automatisch erniedrigt bzw. komplett abgeschaltet wird.

Es ist weiterhin möglich, eine zu hohe Anpresskraft eines nicht genügend trainierten Behandlers, die zu einer massiven Schädigung der zu behandelnden Objektoberfläche, beispielsweise des dentalen Hartgewebes, führen kann, mittels des erfindungsgemäßen Verfahrens zu erkennen, so dass die Leistung automatisch entsprechend reduziert werden kann.

Vorteilhafterweise werden für ein Antwortspektrum der Vergleichswert, der Verschiebungswert sowie der Breitenwert von mindestens einem lokalen Wellenberg bestimmt und parallel ausgewertet.

Dadurch können eventuell auftretende Uneindeutigkeiten der einzelnen Werte ausgeräumt werden, indem beispielsweise eine Plausibilitätsabschätzung durchgeführt wird, um auf die Randbedingungen zu schließen. Eine parallele Betrachtung der verschiedenen bestimmten Werte sowie der dazugehörigen Grenzwerte kann beispielsweise algorithmisch abgebildet werden.

Vorteilhafterweise wird bei Überschreitung des Schwächungsgrenzwerts oder des Verschiebungsgrenzwerts oder des Breitengrenzwerts durch den jeweiligen aus dem Antwortspektrum bestimmten Wert die Schwingungsrichtung und Schwingungsamplitude der Ultraschall-Werkzeugspitze automatisch mittels angeglichener Anregungsschwingung angepasst.

Dadurch kann die Steuerung der Ultraschall-Werkzeugspitze automatisiert werden, so dass die Ultraschall-Werkzeugspitze automatisch auf gegebene Randbedingungen reagiert, ohne dass ein Benutzer diese selbst erkennen muss. Dadurch können Verzögerungszeiten vermieden werden, welche aufgrund der Reaktionszeit oder Unaufmerksamkeit des Benutzers auftreten könnten. Dadurch hängt es vor allem nicht mehr von der Erfahrung des Benutzers ab, die Randbedingungen rechtzeitig zu erkennen und den Betriebszustand der Ultraschall-Werkzeugspitze entsprechend anzupassen.

Vorteilhafterweise handelt es sich bei dem Referenzspektrum um ein Antwortspektrum, welches sich für die mit dem Impuls angeregte, frei schwingende, also nicht an eine Objektoberfläche herangebrachte Ultraschall-Werkzeugspitze ergibt.

Das Antwortspektrum einer frei schwingenden und mit einem Impuls angeregten Ultraschall-Werkzeugspitze kann direkt als Referenzspektrum verwendet werden.

Vorteilhafterweise deckt der Impuls einen möglichst großen Frequenzbereich und möglichst alle Resonanzfrequenzen der Ultraschall-Spitze ab.

Dies ist notwendig, um ein aussagekräftiges Antwortspektrum zu erhalten.

Vorteilhafterweise wird das Antwortspektrum mittels einer Fouriertransformation, einer Laplace-Transformation, einer Z-Transformation oder auch einer wavelet-Transformation der Impulsantwort bestimmt.

Dies sind alles gängige Verfahren, um eine Transformation in den Frequenzbereich durchzuführen, so dass auf entsprechende, bekannte Algorithmen zurückgegriffen werden kann, um eine der Transformationen durchzuführen.

Vorteilhafterweise wird der Vergleichswert durch Summation oder Integration über den Auswahlbereich des Antwortspektrums bzw. über die absoluten Beträge des Antwortspektrums im Auswahlbereich gebildet.

Bei einem in diskreten Werten vorliegenden Antwortspektrum kann eine einfache Summation über die Werte im Auswahlbereich durchgeführt werden und der erhaltene Wert als Vergleichswert verwendet werden.

Liegt ein kontinuierliches Antwortspektrum vor, so kann statt einer Summation eine Integration zur Bestimmung des Vergleichswertes durchgeführt werden.

Vorteilhafterweise wird die Breite des lokalen Wellenbergs des Antwortspektrums bei einer vorgegebenen Höhe bestimmt. Eine geeignete Höhe kann dabei entweder durch den Anwender vorgegeben werden oder sich im Rahmen eines Lernvorgangs für das System ergeben.

Vorteilhafterweise wird die Höhe vom Benutzer vorgegeben.

Die Breite kann beispielsweise auf halber Höhe des Maximums des Wellenberges (full width at half maximum - FWHM) bestimmt und als Breitenwert verwendet werden. Dadurch ist es möglich, nur einen einzigen Wert als Grundlage des Breitenwerts zu bestimmen, der auf einfache Weise ein objektives Kriterium für die Berührung von Desmodont darstellt.

Es wäre beispielsweise aber auch möglich, das Verhältnis von Höhe zu Breite eines Wellenberges zu bestimmen. Dazu wären allerdings zwei Werte, nämlich Höhe und Breite, zu bestimmen.

Vorteilhafterweise wird der Breitengrenzwert anhand einer Breite eines entsprechenden lokalen Wellenbergs des Referenzspektrums ermittelt.

Vorteilhafterweise wird vom Benutzer oder automatisch die Größe sowie die Lage des Auswahlbereichs vor Ermittlung des Antwortspektrums oder anhand des Antwortspektrums festgelegt.

Von der Wahl des Auswahlbereichs hängt die Schnelligkeit sowie die Sensitivität des Verfahrens ab. Das Festlegen des Auswahlbereichs kann es dem Benutzer daher ermöglichen diese Parameter direkten zu beeinflussen. Es ist auch möglich im Rahmen eines Lernvorgangs die Auswahl der Lage sowie der Größe des Auswahlbereichs für das System automatisch vorzunehmen. Hierfür werden mittels eines Algorithmus Bereich ausgewählt, für die eine optimale Klassifikationsrate erreicht wird.

Ein größerer Auswahlbereich ermöglicht gegebenenfalls eine höhere Sensitivität, während ein kleinerer Auswahlbereich die Schnelligkeit des Verfahrens erhöht.

Vorteilhafterweise wird die Größe sowie die Lage des Auswahlbereichs vom Benutzer aufgrund des zu klassifizierenden Materials und der gewünschten Sensitivität des Verfahrens festgelegt.

Da die Spezifität des Antwortspektrums bzw. eines Bereichs des Antwortspektrum von dem von der Ultraschall-Spitze berührten Material der Objektoberfläche abhängt, ist es sinnvoll, bei der Festlegung des Auswahlbereichs das bzw. die möglichen Materialien der Objektoberflächen zu berücksichtigen.

### Kurzbeschreibung der Zeichnung

Ein Ausführungsbeispiel der Erfindung ist in der Zeichnung dargestellt. Es zeigt die
- Fig. 1: eine Prinzipskizze einer dentalen Ultraschallvorrichtung; die
- Fig. 2: ein Flussdiagramm eines erfindungsgemäßen Verfahrens; die
- Fig. 3: eine Impulsantwort einer dentalen Ultraschalwerkzeugspitze; die
- Fig. 4: ein Antwortspektrum für eine an eine Oberfläche herangebrachte Ultraschall-Werkzeugspitze; die
- Fig. 5: ein Antwortspektrum für eine Desmodont berührende Werkzeugspitze; die
- Fig. 6: ein Antwortspektrum für eine blockierte Werkzeugspitze; die
- Fig. 7: ein Antwortspektrum für eine Konkrement berührende Werkzeugspitze.

### Ausführungsbeispiel

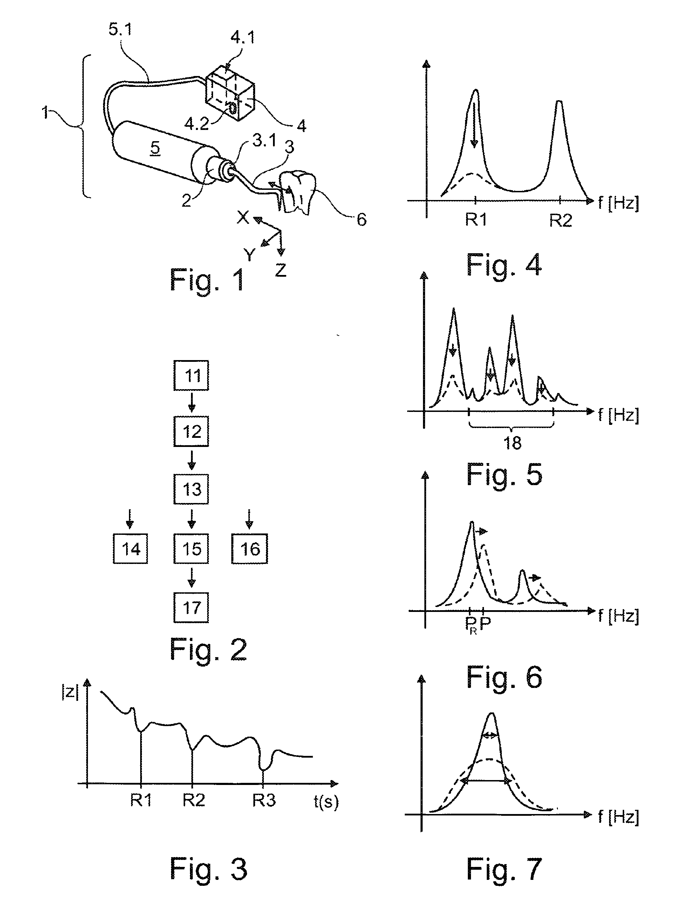

In Fig. 1 ist eine Ultraschallvorrichtung 1 skizziert. Die Ultraschallvorrichtung 1 weist ein Handstück 5 mit einem Ultraschallantrieb 2 und einer stirnseitig am Ultraschallantrieb 2 in einer Werkzeugaufnahme 3.1 gehaltenen Werkzeugspitze 3 auf.

Das Handstück 5 ist über eine Versorgungsleitung 5.1 mit einer Regelungseinheit 4 verbunden, welche ein Mittel 4.1 zur Erfassung des aktuellen Schwingungsverhaltens der Ultraschall-Werkzeugspitze 3 sowie ein Signalmittel 4.2 zur Information eines Benutzers aufweist.

Ein erfindungsgemäßes Verfahren ist in Fig. 2 anhand eines Flussdiagramms veranschaulicht. Zur Ermittlung der aktuellen Randbedingungen wird die Ultraschall-Werkzeugspitze 3 mittels des Ultraschallantriebs 2 mit einem Impuls 17, der ein möglichst breites Frequenzspektrum und insbesondere alle Resonanzfrequenzen der Ultraschall-Werkzeugspitze 3 abdeckt, zu Schwingungen angeregt. Die Impulsantwort 12 der Ultraschall-Werkzeugspitze 3 auf den Impuls 17 wird mittels des Mittels 4.1 zur Erfassung des aktuellen Schwingungsverhaltens aufgezeichnet, indem beispielsweise eine komplexe Impedanz Z der Ultraschall-Werkzeugspitze 3, bestehend aus einem Betrag und einem Phasenwert in Abhängigkeit von der Zeit ermittelt wird, wie es in Fig. 3 dargestellt ist. Es ist auch möglich, als Impulsantwort 12 beispielsweise einen Stromwert und/oder eine abfallenden Spannungswert über die Zeit zu erfassen und auszuwerten.

Aus dem Antwortspektrum 13 wird nun ein Vergleichswert 14 oder ein Verschiebungswert 15 oder ein Breitenwert 16 oder auch alle vorgenannten Werte 14, 15 und 16 bestimmt und mit einem entsprechenden Grenzwert verglichen, woraus auf die aktuellen Randbedingungen der Ultraschall-Werkzeugspitze 3 geschlossen werden kann und deren Schwingungsverhalten in Schritt 17 gegebenenfalls angepasst werden kann.

Aus der Impulsantwort 12 wird ein Antwortspektrum 13 bestimmt, indem die Impulsantwort 12 in den Frequenzbereich transformiert wird. Das Antwortspektrum 13 kann beispielsweise mittels Fourieranalyse, Laplace-Transformation, einer Z-Transformation oder auch einer wavelet-Transformation ermittelt werden. Ein solches Antwortspektrum 13 ist für verschiedene Randbedingungen in den Fig. 4 bis 7 dargestellt.

Wird dies zuerst für eine frei schwingende Ultraschall-Werkzeugspitze 3 durchgeführt, so kann das so ermittelte Antwortspektrum 13 als Referenzspektrum 22 bzw. können die aus dem so ermittelten Antwortspektrum 13 gewonnenen Werte als Referenzwerte dienen.

Für eine frei schwingende Ultraschall-Werkzeugspitze 3 ergeben sich mehrere Wellenberge im Antwortspektrum 13, also Peaks um ein lokales Maximum mit einer spezifischen Breite. Insbesondere für Resonanzfrequenzen der Ultraschall-Werkzeugspitze 3 treten solche Peaks im Antwortspektrum 13 auf. In Fig. 4 ist ein Antwortspektrum 13 mit zwei Resonanzfrequenzen, also zwei Wellenbergen R1 und R2 beispielhaft dargestellt (durchgezogene Linie), wobei jeder Resonanzfrequenzen R1 bzw. R2 eine jeweilige Schwingungsrichtung der Ultraschall-Werkzeugspitze 3 entspricht.

Eine an eine Oberfläche eines Objekts herangebrachte Werkzeugspitze, wird bei einer Schwingung in Richtung des Objekts an die Oberfläche des Objekts anstoßen. Dies führt zu einer Schwächung des zu der entsprechenden Resonanzfrequenz gehörenden Wellenbergs im Antwortspektrum 13. Eine entsprechende lokale Schwächung des Antwortspektrums 13 ist in Fig. 4 beispielhaft für eine Schwächung von R1 als gestrichelte Linie im Vergleich zum Antwortspektrum 13 der entsprechenden frei schwingenden Ultraschall-Werkzeugspitze 3 dargestellt.

Beispielsweise bei der Entfernung von Zahnstein ist es wichtig, einen schabenden Abtrag am Zahn zu gewährleisten und ein traumatisierendes Hämmern gegen den Zahn zu vermeiden. Durch die Analyse des Antwortspektrums 13 und das Auffinden lokaler Schwächungen von Resonanzfrequenzen kann die Schwingungsrichtung während einer Behandlung automatisch nachkorrigiert werden.

Im Gegensatz zu dieser lokalen Schwächung ist in Fig. 5 mit gestrichelter Linie eine globale Schwächung des gesamten betrachteten Antwortspektrums 13 im Vergleich zum Antwortspektrum der entsprechend frei schwingenden Ultraschall-Werkzeugspitze 3 (durchgezogene Linie) dargestellt. Ein entsprechend über einen großen Frequenzbereich abgeschwächtes Antwortspektrum 13 ergibt sich durch eine Berührung von Desmodont durch die Ultraschall-Werkzeugspitze 3.

Durch das Feststellen einer solchen globalen Abschwächung, also das Überschreiten eines entsprechend festgelegten Schwächungsgrenzwertes, kann also auf die entsprechende Randbedingung, nämlich die Berührung von Desmodont, geschlossen werden.

Hierzu kann für ein diskret vorliegendes Antwortspektrum als Vergleichswert 14 beispielsweise die Summe aller Effektivwerte der Betragsfunktion des gesamten aktuell ermittelten Antwortspektrums bestimmt werden.

Unterschreitet dieser Vergleichswert 14 den entsprechenden für das Antwortspektrum 13 der frei schwingenden Ultraschall-Werkzeugspitze 3 ermittelten Wert, so liegt ein Berührung von Desmodont vor.

Damit dient der für das Antwortspektrum der frei schwingenden Ultraschall-Werkzeugspitze 3 bestimmte Wert als Schwächungsgrenzwert. Es kann aber auch ein von diesem Wert abweichender Schwächungsgrenzwert festgelegt werden, mit dem der für das aktuelle Antwortspektrum ermittelte Wert verglichen wird.

Anstatt den Vergleichswert 14 aufgrund des gesamten ermittelten Antwortspektrums 13 zu bilden, kann auch nur ein aussagekräftiger Auswahlbereich 18 des Antwortspektrums 13 zur Bildung des Vergleichswerts 14 herangezogen werden und mit einem entsprechend gebildeten, geeigneten Schwächungsgrenzwert verglichen werden. Der Auswahlbereich 18, beispielhaft in Fig. 5 eingezeichnet, kann vor der Aufnahme des Antwortspektrums 13 oder anhand des Antwortspektrums 13 selbst vom Benutzer festgelegt werden.

Eine Blockade des distalen Endes der Ultraschall-Werkzeugspitze 3 führt zu einer Verschiebung des gesamten Antwortspektrums 13 (gestrichelte Linie) im Frequenzbereich im Vergleich zum Antwortspektrum 13 einer frei schwingenden Ultraschall-Werkzeugspitze 3 (durchgezogene Linie), wie sie in Fig. 6 dargestellt ist.

Um eine solche Verschiebung festzustellen, kann beispielsweise als Verschiebungswert 15 die Position P eines lokalen Maximums des aktuellen Antwortspektrums 13 ermittelt und mit der Position P_{R} des entsprechenden lokalen Maximums in dem für eine frei schwingende entsprechende Ultraschall-Werkzeugspitz 3 ermittelten Antwortspektrum 13 verglichen werden. Somit dient die Position des lokalen Maximums im Antwortspektrum 13 der frei schwingenden Ultraschall-Werkzeugspitze 3 als Verschiebungsgrenzwert. Es kann aber auch ein von diesem Wert abweichender Grenzwert festgelegt werden oder der Abstand der Position P eines lokalen Maximums des aktuellen Antwortspektrums zu der Position P_{R} des entsprechenden lokalen Maximums des Referenzspektrums 22 als Verschiebungswert 15 bestimmt und mit einem geeigneten Verschiebungsgrenzwert 20 verglichen werden.

Um einen verlässlichen Wert für die Verschiebung des Antwortspektrums zu erhalten, sollten mindestens zwei Maxima des Antwortspektrums betrachtet werden.

Eine Überschreitung des Verschiebungsgrenzwerts 20 deutet auf eine Blockade des distalen Endes der Ultraschall-Werkzeugspitze 3 hin.

Fig. 7 zeigt mit gestrichelter Linie eine Dämpfung eines Wellenbergs im Vergleich zum entsprechenden Wellenberg einer frei schwingenden Werkzeugspitze (durchgezogene Linie). Mit Dämpfung wird hier die Verbreiterung eines Wellenbergs im Antwortspektrum 13 bezeichnet, wobei ein auch als Peak bezeichneter Wellenberg einen Maximalwert bzw. Scheitelpunkt und zwei Flanken im Abstand einer bestimmten Breite aufweist. Eine Dämpfung, also die Zunahme der Breite, kann mit einer Abnahme des Maximalwerts des Wellenbergs einher gehen, muss sie aber nicht. Die Dämpfung bzw. Verbreiterung eines Wellenbergs des Antwortspektrums 13 deutet auf eine Berührung von Konkrement hin, wobei das Ausmaß der Verbreiterung ein Maß für die Schichtdicke des berührten Konkrements ist.

Zur Ermittlung einer solchen Dämpfung kann beispielsweise ein Breitenwert 16 eines lokalen Maximums des aktuellen Antwortspektrums 13 für eine festgelegte Höhe, beispielsweise für die halbe Höhe des Maximalwertes (FWHM), festgestellt werden. Dieser Wert kann dann mit dem Breitengrenzwert 21, beispielsweise mit der Breite des entsprechenden lokalen Maximums des Antwortspektrums 13 der frei schwingenden Ultraschall-Werkzeugspitze 3 für die entsprechende Höhe, verglichen werden. Es kann aber natürlich auch ein geeigneter von diesem Wert abweichender Breitengrenzwert 21 festgelegt werden.

Die flächige Ausdehnung einer bestimmten Randbedingung kann durch das Bewegen der Ultraschall-Werkzeugspitze 3 über den entsprechenden Bereich der Objektoberfläche ermittelt werden, wobei die Ultraschall-Werkzeugspitze 3 in möglichst kurzen Zeitabständen immer wieder mittels eines Impulses 11 angeregt und die Impulsantwort 12 aufgezeichnet und wie im vorangegangenen beschrieben ausgewertet wird.

Da es zu Uneindeutigkeiten kommen kann, ob beispielsweise eine Schwächung, welche sich in dem ermittelten Vergleichswert 14 niederschlägt, auf einer globalen Schwächung oder nur einer oder mehreren lokalen Schwächungen beruht, ist es vorteilhaft, alle im Vorangegangenen beschriebenen Werte parallel zu betrachten und mittels einer Plausibilitätsabschätzung auf die jeweilig vorliegenden Randbedingungen zu schließen. Die parallele Betrachtung der mehreren Merkmale kann hierfür algorithmisch abgebildet werden.

Aufgrund der Randbedingungen, welche wie im vorangegangnen bestimmt wurden, kann eine Anpassung des Schwingungsverhaltens der Ultraschall-Werkzeugspitze 3, also der Schwingungsrichtung und/oder der Schwingungsamplitude, vorgenommen werden. Hierfür können die ermittelten Randbedingungen dem Benutzer über das Signalmittel 4.2 angezeigt werden, beispielsweise eine oder mehrere Lampen oder eine andere Anzeige, so dass der Benutzer die notwendige Anpassung der Schwingungsamplitude und/oder der Schwingungsrichtung vornehmen kann. Es ist aber auch möglich, aufgrund der festgestellten Randbedingungen das Schwingungsverhalten automatisch anzupassen. Dadurch können Verzögerungen aufgrund der Reaktionszeit oder Unaufmerksamkeit des Benutzers vermieden werden.

### Bezugszeichenliste

- 1: Vorrichtung
- 2: Ultraschallantrieb
- 3: Ultraschall-Werkzeugspitze
- 3.1: Werzkzeugaufnahme
- 4: Regelungseinheit
- 4.1: Mittel zur Erfassung des Schwingungsverhaltens
- 4.2: Signalmittel
- 5: Handstück
- 6: Zahn
- 11: Impuls
- 12: Impulsantwort
- 13: Antwortspektrum
- 14: Vergleichswert
- 15: Verschiebungswert
- 16: Breitenwert
- 17: Anpassung von Schwingungsrichtung und Schwingungsamplitude
- 18: Auswahlbereich
- 19: Schwächungsgrenzwert
- 20: Verschiebungsgrenzwert
- 21: Breitengrenzwert
- 22: Referenzspektrum

## Patentansprüche

1. Verfahren zur automatischen Ermittlung von Betriebszuständen einer dentalen Ultraschallvorrichtung (1) zum Zweck einer automatischen Anpassung von Schwingungsamplitude und Schwingungsrichtung einer Ultraschall-Werkzeugspitze (3) der Ultraschallvorrichtung (1), wobei die Ultraschall-Werkzeugspitze (3) mittels eines Impulses (11) zu Schwingungen angeregt wird und mindestens eine Impulsantwort (12) nach Heranbringen der Ultraschall-Werkzeugspitze (3) an eine Objektoberfläche ermittelt wird, **dadurch gekennzeichnet, dass** mittels einer Transformation der Impulsantwort (12) in den Frequenzbereich ein Antwortspektrum (13) ermittelt wird und dass
- zur Ermittlung einer Schwächung des Antwortspektrums (13) ein aufgrund eines Auswahlbereichs (18) des Antwortspektrums (13) gebildeter Vergleichswert (14) mit einem Schwächungsgrenzwert (19) verglichen wird oder
- eine Verschiebung im Frequenzbereich des Antwortspektrums (13) gegenüber einem Referenzspektrum (22) als Verschiebungswert (15) ermittelt und mit einem Verschiebungsgrenzwert (20) verglichen wird oder
- eine Breite von mindestens einem lokalen Wellenberg des Antwortspektrums (13) als Breitenwert (16) ermittelt und mit einem Breitengrenzwert(21) verglichen wird.

2. Verfahren nach Anspruch 1, **dadurch gekennzeichnet, dass** für ein Antwortspektrum (13) der Vergleichswert (14), der Verschiebungswert (15) sowie der Breitenwert (16) von mindestens einem lokalen Wellenberg bestimmt und parallel ausgewertet werden.

3. Verfahren nach Anspruch 1 oder 2, **dadurch gekennzeichnet, dass** bei Überschreitung des Schwächungsgrenzwerts (19) oder des Verschiebungsgrenzwerts (20) oder des Breitengrenzwerts (21) durch den jeweiligen aus dem Antwortspektrum (13) bestimmten Wert (14, 15, 16) die Schwingungsrichtung und Schwingungsamplitude der Ultraschall-Werkzeugspitze (3) automatisch mittels angeglichener Anregungsschwingung angepasst wird.

4. Verfahren nach einem der Ansprüche 1 bis 3, **dadurch gekennzeichnet, dass** es sich bei dem Referenzspektrum (22) um ein Antwortspektrum (13) handelt, welches sich für die mit dem Impuls (11) angeregte, frei schwingende, also nicht an eine Objektoberfläche herangebrachte Ultraschall-Werkzeugspitze (3) ergibt.

5. Verfahren nach einem der Ansprüche 1 bis 4, **dadurch gekennzeichnet, dass** der Impuls (11) einen möglichst großen Frequenzbereich und möglichst alle Resonanzfrequenzen der Ultraschall-Spitze (3) abdeckt.

6. Verfahren nach einem der Ansprüche 1 bis 5, **dadurch gekennzeichnet, dass** das Antwortspektrum (13) mittels einer Fouriertransformation der Impulsantwort (12) bestimmt wird.

7. Verfahren nach einem der Ansprüche 1 bis 5, **dadurch gekennzeichnet, dass** das Antwortspektrum (13) mittels einer Laplace-Transformation der Impulsantwort (12) bestimmt wird.

8. Verfahren nach einem der Ansprüche 1 bis 5, **dadurch gekennzeichnet, dass** das Antwortspektrum (13) mittels einer Z-Transformation der Impulsantwort (12) bestimmt wird.

9. Verfahren nach einem der Ansprüche 1 bis 5, **dadurch gekennzeichnet, dass** das Antwortspektrum (13) mittels einer wavelet-Transformation der Impulsantwort (12) bestimmt wird.

10. Verfahren nach einem der Ansprüche 1 bis 9, **dadurch gekennzeichnet, dass** der Vergleichswert (14) durch Summation oder Integration über den Auswahlbereich (18) des Antwortspektrums (13) bzw. über die absoluten Beträge des Antwortspektrums (13) im Auswahlbereich (18) gebildet wird.

11. Verfahren nach einem der Ansprüche 1 bis 10, **dadurch gekennzeichnet, dass** die Breite des lokalen Wellenbergs des Antwortspektrums (13) bei einer vorgegebenen Höhe bestimmt wird.

12. Verfahren nach Anspruch 11, **dadurch gekennzeichnet, dass** die Höhe vom Benutzer vorgegeben wird.

13. Verfahren nach Anspruch 11 oder 12, **dadurch gekennzeichnet, dass** der Breitengrenzwert (21) anhand einer Breite eines lokalen Wellenbergs des Referenzspektrums (22) ermittelt wird, der dem lokalen Wellenberg des Antwortspektrums (13) zugeordnet ist.

14. Verfahren nach einem der Ansprüche 1 bis 13, **dadurch gekennzeichnet, dass** vom Benutzer oder automatisch die Größe sowie die Lage des Auswahlbereichs (18) vor Ermittlung des Antwortspektrums (13) oder anhand des Antwortspektrums (13) festgelegt wird.

15. Verfahren nach Anspruch 14, **dadurch gekennzeichnet, dass** die Größe sowie die Lage des Auswahlbereichs (18) vom Benutzer aufgrund des zu klassifizierenden Materials und der gewünschten Sensitivität des Verfahrens festgelegt wird.

## Claims

1. A method for the automatic determination of operational states of a dental ultrasonic device (1) for the purpose of automatically adapting the oscillational amplitude and the direction of oscillation of an ultrasonic bit (3) of the ultrasonic device (1), wherein the ultrasonic bit (3) is excited to perform oscillation by means of a pulse (11) and at least one pulse response (12) is ascertained on advancing the ultrasonic bit (3) towards a surface of an object, **characterized in that** a response spectrum (13) is ascertained by means of transformation of said pulse response (12) to the frequency domain and that for the purpose of determining an attenuation of said response spectrum (13), a reference value (14) formed on the basis of a selection area (18) of said response spectrum (13) is compared with an attenuation threshold value (19) or a shift in the frequency domain of said response spectrum (13) in relation to a reference spectrum (22) is ascertained as a displacement value (15) and compared with a displacement threshold value (20) or a breadth of at least one local wave crest in said response spectrum (13) is ascertained as a breadth value (16) and compared with a breadth threshold value (21).

2. The method as defined in claim 1, **characterized in that** for acquisition of a response spectrum (13), said reference value (14), said displacement value (15), and said breadth value (16) of at least one local wave crest are determined and simultaneously evaluated.

3. The method as defined in claim 1 or claim 2, **characterized in that** when said attenuation threshold value (19) or said displacement threshold value (20) or said breadth threshold value (21) is exceeded by the respective value (14, 15, 16) obtained from said response spectrum (13), the direction of oscillation and the oscillational amplitude of said ultrasonic bit (3) are automatically adjusted by means of matched excitation oscillation.

4. The method as defined in any one of claims 1 to 3, **characterized in that** said reference spectrum (22) is a response spectrum (13) as results for said ultrasonic bit (3) when excited by said pulse (11) and allowed to oscillate freely, i.e. not caused to approach a surface of an object.

5. The method as defined in any one of claims 1 to 4, **characterized in that** said pulse (11) covers as large a frequency domain as possible and, if possible, all of the resonance frequencies of said ultrasonic bit (3).

6. The method as defined in any one of claims 1 to 5, **characterized in that** said response spectrum (13) is determined by means of a Fourier transformation of said pulse response (12).

7. The method as defined in any one of claims 1 to 5, **characterized in that** said response spectrum (13) is determined by means of a Laplace transformation of said pulse response (12).

8. The method as defined in any one of claims 1 to 5, **characterized in that** said response spectrum (13) is determined by means of a Z transformation of said pulse response (12).

9. The method as defined in any one of claims 1 to 5, **characterized in that** said response spectrum (13) is determined by means of a Wavelet transformation of said pulse response (12).

10. The method as defined in any one of claims 1 to 9, **characterized in that** said reference value (14) is formed by summation or integration over said selection area (18) in said response spectrum (13) or over the absolute values of said response spectrum (13) in said selection area (18).

11. The method as defined in any one of claims 1 to 10, **characterized in that** the breadth of said local wave crest in said response spectrum (13) is determined at a specific height.

12. The method as defined in claim 11, **characterized in that** said height is determined by the user.

13. The method as defined in claim 11 or claim 12, **characterized in that** said breadth threshold value (21) is ascertained on the basis of a breadth of a local wave crest in said reference spectrum (22) assigned to the local wave crest in said response spectrum (13).

14. The method as defined in any one of claims 1 to 13, **characterized in that** the size and position of said selection area (18) is determined by the user or automatically prior to determination of said response spectrum (13) or on the basis of said response spectrum (13).

15. The method as defined in claim 14, **characterized in that** the size and position of said selection area (18) is determined by the user on the basis of the material to be classified and the desired sensitivity of the method.

## Revendications

1. Procédé de détermination automatique des états opérationnels d'un dispositif dentaire à ultrasons (1) en vue d'une adaptation automatique de l'amplitude d'oscillation et du sens d'oscillation d'une pointe d'outil à ultrasons (3) du dispositif à ultrasons (1), dans lequel la pointe d'outil à ultrasons (3) est excitée par une impulsion (11) pour produire des oscillations, et au moins une réponse impulsionnelle (12) est déterminée suite au rapprochement de la pointe d'outil à ultrasons (3) d'une surface d'objet, **caractérisé en ce qu'**un spectre de réponse (13) est déterminé par une transformation de la réponse impulsionnelle (12) dans la plage de fréquences, et **en ce que**
- une valeur de comparaison (14) formée sur la base de la plage de sélection (18) du spectre de réponse (13) est comparée à une valeur limite d'atténuation (19) pour déterminer une atténuation du spectre de réponse (13), ou
- une dérive dans la plage de fréquences du spectre de réponse (13) par rapport à un spectre de référence (22) est déterminée comme une valeur de dérive (15) et comparée à une valeur limite de dérive (20), ou
- une largeur d'au moins une crête d'onde locale du spectre de réponse (13) est déterminée comme une valeur de largeur (16) et comparée à une valeur limite de largeur (21).

2. Procédé selon la revendication 1, **caractérisé en ce que** pour un spectre de réponse (13), la valeur de comparaison (14), la valeur de dérive (15) ainsi que la valeur de largeur (16) d'au moins une crête d'onde locale sont déterminées et évaluées en parallèle.

3. Procédé selon la revendication 1 ou 2, **caractérisé en ce qu'**en cas de dépassement de la valeur limite d'atténuation (19) ou de la valeur limite de dérive (20) ou de la valeur limite de largeur (21) par la valeur respective (14, 15, 16) déterminée à partir du spectre de réponse (13), le sens d'oscillation et l'amplitude d'oscillation de la pointe d'outil à ultrasons (3) sont automatiquement adaptés au moyen d'une oscillation d'excitation compensée.

4. Procédé selon l'une quelconque des revendications 1 à 3, **caractérisé en ce que** le spectre de référence (22) est un spectre de réponse (13) résultant pour la pointe d'outil à ultrasons (3) excitée par l'impulsion (11) et oscillant librement, c'est-à-dire non rapprochée d'une surface d'objet.

5. Procédé selon l'une quelconque des revendications 1 à 4, **caractérisé en ce que** l'impulsion (11) couvre une plage de fréquences aussi grande que possible et dans la mesure du possible toutes les fréquences de résonance de la pointe à ultrasons (3).

6. Procédé selon l'une quelconque des revendications 1 à 5, **caractérisé en ce que** le spectre de réponse (13) est déterminé au moyen d'une transformation de Fourier de la réponse impulsionnelle (12).

7. Procédé selon l'une quelconque des revendications 1 à 5, **caractérisé en ce que** le spectre de réponse (13) est déterminé au moyen d'une transformation de Laplace de la réponse impulsionnelle (12).

8. Procédé selon l'une quelconque des revendications 1 à 5, **caractérisé en ce que** le spectre de réponse (13) est déterminé au moyen d'une transformation Z de la réponse impulsionnelle (12).

9. Procédé selon l'une quelconque des revendications 1 à 5, **caractérisé en ce que** le spectre de réponse (13) est déterminé au moyen d'une transformation en onde-lettes de la réponse impulsionnelle (12).

10. Procédé selon l'une quelconque des revendications 1 à 9, **caractérisé en ce que** la valeur de comparaison (14) est formée par sommation ou intégration sur la plage de sélection (18) du spectre de réponse (13) ou sur les valeurs absolues du spectre de réponse (13) dans la plage de sélection (18).

11. Procédé selon l'une quelconque des revendications 1 à 10, **caractérisé en ce que** la largeur de la crête d'onde locale du spectre de réponse (13) est déterminée à une hauteur spécifiée.

12. Procédé selon la revendication 11, **caractérisé en ce que** la hauteur est spécifiée par l'utilisateur.

13. Procédé selon la revendication 11 ou 12, **caractérisé en ce que** la valeur limite de largeur (21) est déterminée à l'aide d'une largeur d'une crête d'onde locale du spectre de référence (22) associée à la crête d'onde locale du spectre de réponse (13).

14. Procédé selon l'une quelconque des revendications 1 à 13, **caractérisé en ce que** la grandeur ainsi que la position de la plage de sélection (18) sont définies par l'utilisateur ou de manière automatique avant la détermination du spectre de réponse (13) ou à l'aide du spectre de réponse (13).

15. Procédé selon la revendication 14, **caractérisé en ce que** la grandeur ainsi que la position de la plage de sélection (18) sont définies par l'utilisateur sur la base de la matière à classifier et de la sensibilité de procédé souhaitée.
